# FASCICULE DE BREVET EUROPEEN

(11) **EP 3 750 636 B1**
(45) Date de publication et mention de la délivrance du brevet: **02.11.2022**
(21) Numéro de dépôt: 20178915.3
(22) Date de dépôt: 09.06.2020
(51) Int. Cl.: B05B 15/50, B05B 12/00, C03C 25/146, C03C 25/1095, C03C 25/26, D04H 1/655, D04H 1/4218, B05B 1/20, B05B 7/08, B05B 7/14, B05B 12/08

(54) **DISPOSITIF ET PROCÉDÉ DE CONTRÔLE DE LA PROJECTION D'UNE COMPOSITION D'ENCOLLAGE DANS UNE INSTALLATION DE FABRICATION DE LAINE MINÉRALE**
VORRICHTUNG UND VERFAHREN ZUR KONTROLLE DER EINSPRITZUNG EINER LEIMZUSAMMENSETZUNG IN EINER ANLAGE ZUR HERSTELLUNG VON MINERALWOLLE
DEVICE AND METHOD FOR CONTROLLING THE DISCHARGE OF A SIZING COMPOSITION IN AN INSTALLATION FOR MANUFACTURING MINERAL WOOL

(30) Priorité: 11.06.2019 FR 1906169
(43) Date de publication de la demande: 16.12.2020
(73) Titulaire: SAINT-GOBAIN ISOVER, 92400 Courbevoie (FR)
(72) Inventeur: PAILLARD, Guillaume, 60600 CLERMONT (FR); BEDOUHENE, Fatma, 95350 SAINT-BRICE SOUS FORET (FR); KOWALEWSKI, Patrick, 60000 BEAUVAIS (FR)
(74) Mandataire: Ex Materia

(56) Documents cités:
- EP-A1- 1 491 261
- FR-A1- 3 069 464
- JP-A- H04 224 065
- JP-A- S61 249 562
- US-A1- 2005 011 281

## Description

L'invention se rapporte au domaine de la fabrication de laine minérale, par exemple du type laine de verre, et elle concerne plus particulièrement les dispositifs et procédés de projection d'une composition d'encollage entre et/ou sur les fibres minérales utilisées pour fabriquer de telles laines.

Dans des installations de fabrication de laine minérale, comme par exemple celle divulguée dans FR 3 069 464, les fibres minérales, par exemple des fibres de verre, sont formées dans un poste de fibrage d'où elles tombent en direction d'un convoyeur, par exemple sous l'effet d'un flux d'air descendant. Sur leur passage vers ce convoyeur, une composition d'encollage est pulvérisée sur ces fibres. Cette composition d'encollage participe à conférer à la laine minérale finie sa cohésion et ses propriétés, par exemple, ses propriétés mécaniques et/ou thermiques et/ou phoniques. La composition d'encollage comprend, par exemple, un pulvérisant et un liant formé d'une résine, d'un fluide, tel que de l'eau, servant de diluant, et d'additifs le cas échéant. Ce liant est destiné à être combiné au pulvérisant, par exemple de l'air comprimé, pour réaliser la pulvérisation du liant sur les fibres sous forme de gouttelettes pour faciliter l'écoulement du liant entre et/ou sur les fibres.

Les fibres minérales encollées tombent sur le convoyeur précédemment évoqué, et le matelas ainsi formé est ensuite dirigé vers une étuve dans laquelle le liant de la composition d'encollage est polymérisé. Un matelas continu de laine minérale est ainsi formé, matelas continu qui peut ensuite être découpé pour former des panneaux ou des rouleaux d'isolation thermique et/ou acoustique.

La projection du liant est réalisée par un système de projection comprenant, par exemple, au moins une couronne à l'intérieur de laquelle passent successivement les fibres minérales, une telle couronne étant équipée d'une pluralité de buses de projection réparties autour de la zone de passage des fibres minérales. Selon un exemple, un tel système de projection peut comporter une première couronne configurée pour acheminer le liant et une deuxième couronne configurée pour acheminer distinctement un flux d'air comprimé, le flux d'air et le flux de liant étant, par exemple, mélangés dans les buses de projection agencées entre les couronnes pour permettre en sortie de buse(s) de pulvériser le liant sur les fibres.

On comprend aisément, par exemple, qu'un bouchage, partiel ou total, d'une ou plusieurs buses de projection, en entraînant une modification des conditions d'écoulement de la composition d'encollage au travers de ces buses, peut entraîner une variation non désirée des propriétés, par exemple mécaniques et/ou thermiques et/ou acoustiques, de la laine minérale finie, ou une variation de l'homogénéité de cette dernière, ce qui peut nuire à la qualité du produit fini. Notamment, un bouchage de buses peut générer une absence de composition d'encollage sur une partie des fibres minérales passant à travers les couronnes annulaires et donc une hétérogénéité de la distribution de liant présent dans cette composition d'encollage.

Dans ce contexte, il est connu de rechercher des moyens fiables d'identification de bouchage des buses. Il est connu d'utiliser des moyens de contrôle par manomètre, configuré pour permettre de vérifier le débit d'air circulant dans la couronne correspondante. Mais dans une configuration telle que précédemment décrite où le dispositif de projection à couronne est équipé d'une pluralité de buses, la surpression de l'air générée localement au niveau d'une buse bouchée est compensée par une projection à plus forte pression dans les buses voisines, la valeur de pression d'air ainsi relevé en amont de la couronne pouvant rester sensiblement la même malgré ce cas de bouchage d'une buse.

La présente invention a pour but de proposer une solution permettant de détecter avec précision un bouchage, total ou partiel, d'une ou plusieurs buses de projection, ainsi que, plus généralement, une modification de l'écoulement de la composition d'encollage au travers des buses du dispositif de projection, par exemple sous l'effet d'un bouchage, partiel ou total, d'une ou plusieurs de ces buses de projection.

Pour atteindre son but, l'invention a pour objet, selon un premier aspect, un système de projection d'une composition d'encollage sur des fibres minérales, le système de projection comprenant au moins une couronne à l'intérieur de laquelle les fibres minérales sont destinées à passer, ainsi qu'au moins une buse de projection configurée pour projeter la composition d'encollage sur les fibres minérales, le système de projection comportant un dispositif de contrôle comprenant au moins un premier appareil configuré pour mesurer un débit d'un fluide relatif à la composition d'encollage projetée et un deuxième appareil configuré pour mesurer une pression d'un fluide relatif à la composition d'encollage projetée, ainsi qu'un module configuré pour comparer au moins un couple formé par la valeur, mesurée par le premier appareil, du débit de fluide et la valeur, mesurée par le deuxième appareil, de la pression de fluide, avec au moins un couple formé par une première valeur de référence, préalablement définie, du débit du fluide considéré, et par une deuxième valeur de référence, préalablement définie, de la pression du fluide considéré, le système de projection comportant au moins une pompe d'alimentation du fluide piloté de sorte qu'une valeur de débit du fluide est maintenue constante.

Comme évoqué précédemment, la composition d'encollage comprend avantageusement au moins deux composants : un liant destiné à être polymérisé, et un composant, désigné dans ce qui suit comme pulvérisant, permettant la projection de ce liant par la ou les buses de projection du système de projection. Liant et pulvérisant sont des fluides, coopérant pour permettre la projection de la composition d'encollage sur les fibres minérales. Selon un exemple, le pulvérisant utilisé pour la projection est de l'air comprimé. Le pulvérisant et le liant, acheminés via un circuit de distribution en direction de la ou les buses de projection, peuvent notamment être mélangés au sein de la ou des buses de projection. On considérera, dans ce qui suit, que le système de projection précédemment défini comporte une pluralité de buses de projection réparties sur la ou les couronnes à l'intérieur desquelles les fibres minérales passent en recevant la composition d'encollage projetée.

Il convient de noter que le nombre de buses et leur écartement les unes des autres dépend de la forme, par exemple annulaire, et de la dimension de la couronne, ainsi que du type de buses utilisé sur cette couronne. L'invention permet de détecter le bouchage d'une ou plusieurs buses quelles que soient leur conception, les seuils d'alertes pouvant varier notamment en fonction du nombre de buses présentes et du recouvrement de leur jet sur la composition.

Dans ce qui suit, on désignera par conditions normales de projection des conditions dans lesquelles l'écoulement de la composition d'encollage au travers des buses de projection n'est perturbé ni en nature ni en flux. Plus précisément, dans des conditions normales de projection, la nature de la composition d'encollage projetée, tant en termes de proportion des composants qui la constituent qu'en termes d'écoulement, n'est pas modifiée par une éventuelle altération d'une section de passage au travers d'une ou plusieurs buses de projection.

Par opposition aux conditions normales de projection, on désignera dans ce qui suit par "altérées" des conditions de projection de la composition d'encollage dans lesquelles l'écoulement de cette dernière au travers des buses de projection est modifié consécutivement à une modification d'une section de passage au travers de ces buses.

Le dispositif de contrôle selon l'invention comprend un premier appareil configuré pour mesurer un débit d'un fluide de la composition d'encollage, et un deuxième appareil configuré pour mesurer une pression d'un fluide de la composition d'encollage. Selon différents exemples, le débit considéré peut être un débit massique ou un débit volumique du fluide choisi.

Selon un exemple privilégié, mais non exclusif, de réalisation de l'invention, le premier appareil et le deuxième appareil précités sont configurés pour mesurer respectivement un débit et une pression d'un même fluide de la composition d'encollage. Selon un exemple, un débit et une pression du liant, précédemment défini, de la composition d'encollage, sont mesurés respectivement par le premier appareil et par le deuxième appareil. Il est avantageux selon l'invention de contrôler le débit et la pression du liant, puisqu'il s'agit dans la composition d'encollage tel que précédemment évoqué avec le liant d'une part et le pulvérisant d'autre part du seul fluide incompressible, c'est-à-dire du seul fluide pour lequel une relation fiable entre débit et pression est constatée.

Il faut comprendre ici que, dans le dispositif de contrôle selon l'invention, le premier appareil et le deuxième appareil mesurent simultanément respectivement le débit et la pression précédemment évoqués. Le couple que ces valeurs mesurées forment ensemble constitue donc, à l'instant auquel la mesure est effectuée, une caractérisation, par deux grandeurs physicochimiques distinctes, de la projection de la composition d'encollage et, notamment, de son écoulement au travers de la couronne et des buses de projection.

Selon l'invention, les valeurs de référence, préalablement définies, du débit et de la pression de fluide, sont obtenues, selon différents exemples, par étalonnage, ou par modélisation, ou par une combinaison de ces deux méthodes, de la projection de la composition d'encollage. A titre d'exemples non limitatifs, différents couples de valeurs de référence du débit et de la pression considérés peuvent être établis en fonction du type de buse de projection utilisée, et/ou en fonction de différentes proportions des constituants de la composition d'encollage. En d'autres termes, l'invention prévoit que les couples de valeurs de référence du débit et de la pression considérés sont issus d'abaques établis pour différents paramètres de projection de la composition d'encollage tels que, par exemple, le type de buse de projection (nature, forme et dimensions de la section de projection, ...) et/ou des proportions, par exemple, du liant et du pulvérisant dans la composition d'encollage projetée. Notamment, les abaques peuvent considérer des proportions air/liquide, c'est-à-dire des proportions entre pulvérisant et liant à valeur constante déterminée. En d'autres termes, on peut contrôler selon l'invention le bouchage de buses dans un contexte de projection de composition d'encollage dont la proportion des fluides le composant est connu, ici dans un rapport entre air et liquide. Bien entendu, ces valeurs sont données à titre d'exemple et des abaques peuvent être réalisées par étalonnage notamment avec d'autres proportions de composants dans la composition d'encollage. Par ailleurs, pour un abaque donné, les différentes valeurs de référence de l'une des grandeurs, débit ou pression, peuvent correspondre, par exemple, à différentes vitesses de défilement des fibres minérales à l'intérieur du système de projection de la composition d'encollage.

Le dispositif de contrôle selon l'invention comprend également un module configuré pour comparer un couple de valeurs mesurées de débit et de pression avec un couple de valeurs de référence de ces valeurs, obtenu par les abaques précités. La comparaison précitée peut être effectuée sur l'une et/ou l'autre des grandeurs mesurées, ou sur une combinaison, en valeur absolue, des valeurs de ces grandeurs (par exemple, un rapport des valeurs de ces grandeurs, en valeur absolue). Autrement dit, selon différents exemples non limitatifs, le débit et la pression mesurés sont l'un et/ou l'autre comparés respectivement avec les valeurs de débit et de pression du couple de valeurs de référence correspondant, ou bien un rapport, en valeur absolue, des valeurs mesurées du débit et de la pression peut être comparé à un rapport, en valeur absolue, des valeurs de débit et de pression du couple de valeurs de référence.

La comparaison du couple de valeurs par ce module, ou unité de commande, peut également être effectuée en comparant, pour une composante figée de débit, respectivement de pression, la valeur correspondante de pression, respectivement de débit, dans le couple de valeurs mesuré avec la valeur correspondante de pression, respectivement de débit, dans le couple de valeurs de référence. On vérifie ainsi, via l'unité de commande que pour une valeur mesurée, l'autre valeur du couple de valeurs est équivalente à la valeur théoriquement attendue en référence aux abaques.

Selon l'invention, le débit de liant, et le cas échéant de pulvérisant, reste constant tout au long de l'opération d'encollage, avec par exemple un débit de liant de l'ordre de 1500 litres par heure, les pompes permettant de pousser le liant vers la couronne et les buses de projection étant alimentées pour maintenir ce débit constant même en cas de modification de la section de passage dans la couronne ou dans l'une ou l'autre des buses de projection.

Grâce à une telle comparaison prenant en compte à la fois le paramètre de débit et de celui de pression du fluide, et notamment du liant formant fluide incompressible, l'invention permet ainsi la détection fiable d'une modification de l'écoulement de la composition d'encollage au travers d'une ou plusieurs buses de projection.

Alternativement, les abaques précédemment évoqués peuvent être établis lorsque, toutes choses égales par ailleurs, une ou plusieurs buses de projection sont partiellement ou totalement bouchées, c'est-à-dire, en référence à ce qui précède, pour des conditions de projection altérées. Par exemple, un abaque pourra être réalisé pour des proportions prédéfinies de liant et de pulvérisant dans la composition d'encollage, et en considérant qu'un nombre prédéfini de buses de projection est totalement bouché. Ceci permet alors de disposer de valeurs de référence correspondant à un cas prédéfini d'altération de l'écoulement de la composition d'encollage au travers des buses de projection, cas prédéfini dans lequel l'altération considérée peut induire, sur le produit fini qu'est la laine minérale, une perte significative de qualité. La comparaison entre couple de valeurs mesurées et couple de valeurs de référence permet alors, plutôt que de détecter un écart avec des conditions normales de projection, de détecter l'instant où un tel écart a des conséquences inadmissibles sur la qualité du produit fini. L'invention peut également présenter une ou plusieurs des caractéristiques suivantes, prises séparément ou en combinaison.

Le système de projection selon l'invention comprend une unité de commande configurée pour commander le premier appareil et le deuxième appareil à mesurer simultanément respectivement un débit d'un fluide de la composition d'encollage et une pression d'un fluide de la composition d'encollage en temps réel. Avantageusement, une telle unité de commande comprend le module de comparaison précédemment défini. Il résulte de ce qui précède que, selon cette caractéristique de l'invention, les mesures sont effectuées "en temps réel", c'est-à-dire à des intervalles de temps suffisamment courts pour que toute variation significative de l'une et/ou l'autre des grandeurs mesurées soit détectée. Il faut comprendre ici par "significative" toute variation supérieure à l'incertitude de la mesure effectuée.

L'unité de commande est configurée pour générer un premier signal d'alerte dès lors qu'un écart entre un couple de valeurs mesurées de débit et de pression de fluide et un couple de valeurs de référence de débit et de pression de fluide franchit un premier seuil d'alerte prédéfini. On entend, ici et dans l'ensemble du texte qui va suivre, par « écart entre un couple de valeurs mesurées et un couple de valeurs de référence » une différence entre une valeur mesurée et une valeur de référence correspondante, avec l'autre valeur du couple de valeurs qui est la même pour le couple de valeurs mesurées et pour le couple de valeurs de référence. Avantageusement, selon l'invention, on choisit une valeur de débit du fluide que l'on maintient constante par un pilotage approprié d'une pompe d'alimentation du fluide et on compare la valeur de pression mesurée et la valeur de pression de référence.

Il faut également comprendre ici que, selon que les grandeurs mesurées augmentent ou diminuent au cours du temps, la notion de "franchissement" du premier seuil d'alerte surviendra selon que la ou les grandeurs considérées deviennent supérieures ou inférieures au premier seuil d'alerte précité. Puisque le débit est maintenu constant à une valeur prédéfinie, le premier seuil précité peut être une valeur prédéfinie, ou un pourcentage prédéfini de variation, de la pression mesurée. Selon un exemple, le premier seuil d'alerte précité correspond aux valeurs que prennent l'une et/ou l'autre des grandeurs mesurées lorsqu'un premier niveau de bouchage, préalablement défini, est atteint pour une ou plusieurs buses de projection. Selon un exemple, le premier signal d'alerte précité peut prendre la forme d'un signal sonore et/ou lumineux émis, par exemple, dans un poste de contrôle du système de projection de la composition d'encollage, ou il peut prendre la forme d'une commande de l'arrêt du procédé de projection de la composition d'encollage afin d'éviter une perte importante de qualité de la laine minérale finie.

Le type de signal pourra notamment être choisi en fonction de la configuration des buses du dispositif de projection. Notamment, si les buses sont en nombre réduit et donc espacées les unes des autres de telle sorte que les jets de buses voisines ne se recouvrent pas, il importe que le dépassement d'un premier niveau d'alerte implique aussitôt un arrêt de l'installation pour vérifier le bouchage éventuel d'une buse et éviter que toute une partie du voile de fibres passant à travers la couronne ne soit pas imprégnée de composition d'encollage. Alternativement, si les buses sont en nombre suffisant pour que les jets de buses voisines se recouvrent, le dépassement d'un premier niveau d'alerte peut impliquer uniquement une alerte auprès de l'opérateur pour qu'il soit attentif au dépassement éventuel d'un deuxième seuil, potentiellement révélateur du bouchage de deux buses voisines qui pourrait cette fois impliquer que toute une partie du voile de fibres passant à travers la couronne ne soit pas imprégnée de composition d'encollage.

L'unité de commande précédemment définie est configurée pour générer un deuxième signal d'alerte dès lors qu'un écart entre un couple de valeurs mesurées de débit et de pression de fluide et un couple de valeurs de référence de débit et de pression de fluide est supérieur à un deuxième seuil d'alerte préalablement défini. Selon différents exemples, le deuxième signal d'alerte peut prendre la forme d'un signal sonore et/ou lumineux émis dans un poste de contrôle, ou il peut prendre la forme d'une commande de l'arrêt du procédé de projection de la composition d'encollage afin d'éviter une perte importante de qualité de la laine minérale finie.

Le dispositif de contrôle selon l'invention est configuré de manière à générer une étape de rétroaction dont le contenu est fonction du déclenchement du premier ou du deuxième signal d'alerte. En d'autres termes, une première action peut être menée, de façon automatique ou manuelle, lorsque le premier seuil d'alerte est dépassé et qu'un premier signal d'alerte est généré, et une deuxième action peut être menée, de façon automatique ou manuelle, lorsque le deuxième seuil d'alerte est dépassé et qu'un deuxième signal d'alerte est généré.

A titre d'exemples non limitatifs, une première action peut consister en une passe d'un jet d'eau à forte pression sur chacune des buses, soit par un opérateur, soit automatiquement par un outillage approprié. Et une deuxième action peut consister en le changement de la couronne, pour procéder au nettoyage ou au remplacement de la couronne alors que la fabrication continue avec la couronne de remplacement. Cette distinction faite entre les niveaux d'alerte peut permettre de prévoir une première action sur la couronne sans arrêt de la chaine de fabrication, la mise en oeuvre de la deuxième action, notamment si la première action n'a eu aucun effet notable, impliquant un arrêt de la fabrication. On pourrait également prévoir un dispositif à double couronne, avec une couronne opérationnelle et une couronne de supplément qui n'est mis en oeuvre que lorsque la couronne opérationnelle doit être remplacée à la suite du déclenchement du deuxième signal d'alerte.

Selon une caractéristique de l'invention, le premier appareil est configuré pour mesurer un débit d'un liant formant un fluide incompressible de la composition d'encollage projetée et le deuxième appareil est configuré pour mesurer une pression de ce liant.

Selon une caractéristique alternative de l'invention, le système de projection comporte des moyens de maintien d'un ratio constant entre les fluides composant la composition d'encollage et l'un des appareils est configuré pour mesurer une valeur de débit, respectivement de pression, du liant formant un fluide incompressible de la composition d'encollage projetée tandis que l'autre appareil est configuré pour mesurer une valeur de pression, respectivement de débit, d'air formant un deuxième fluide de la composition d'encollage.

Selon le premier aspect tel qu'il vient d'être décrit, l'invention atteint bien le but qu'elle s'était fixé, en offrant une solution permettant de détecter, avec précision et par des moyens simples, toute modification de l'écoulement de la composition d'encollage au travers d'une ou plusieurs buses de projection, par exemple en cas de bouchage, partiel ou total, d'une ou plusieurs de ces buses de projection.

Selon un deuxième aspect, l'invention s'étend à un procédé de contrôle de la qualité de projection d'une composition d'encollage sur des fibres minérales, comprenant au moins :
- une étape de définition d'une pluralité de couples de valeurs de référence respectivement d'un débit d'un fluide de la composition d'encollage et d'une pression d'un fluide de la composition d'encollage,
- une étape de mesure simultanée, respectivement par un premier appareil et par un deuxième appareil d'un système de projection tel que précédemment décrit, d'une valeur d'un débit d'un fluide de la composition d'encollage et d'une valeur d'une pression d'un fluide de la composition d'encollage,
- une étape de comparaison du couple formé par les valeurs mesurées de débit et de pression de fluide avec au moins un couple de valeurs de référence de débit et de pression de fluide,
- l'alimentation du fluide de la composition d'encollage étant pilotée par une pompe de sorte qu'une valeur de débit du fluide est maintenue constante.

Les différents couples de valeurs de référence sont, comme précédemment évoqué, obtenus par des abaques réalisés, par exemple, par étalonnage préalable et/ou par modélisation de la projection de la composition d'encollage sur les fibres minérales. La première étape du procédé selon l'invention consiste donc en l'établissement de tels abaques, par étalonnage du système de projection de la composition d'encollage et/ou par modélisation de cette projection pour différents paramètres opérationnels.

Selon différents exemples, les paramètres opérationnels choisis pour l'établissement des abaques précités peuvent comprendre, non exhaustivement : une proportion de liant et de pulvérisant dans la composition d'encollage, une forme et des dimensions prédéfinies de buses de projection. Selon un exemple, un tel abaque peut présenter l'évolution de la pression du liant de la composition d'encollage en fonction du débit de celui-ci, pour une valeur prédéfinie du pourcentage de liant et de pulvérisant dans cette composition d'encollage, dans des conditions normales de projection, telles que précédemment définies. A titre d'exemple, pour une vitesse prédéfinie de passage des fibres minérales dans une telle couronne et pour une proportion prédéfinie de liant et de pulvérisant dans la composition d'encollage projetée, on obtient alors un unique couple de valeurs de pression et de débit du liant, formant un couple de valeurs de référence pour ces paramètres opérationnels. Alternativement, le couple de valeurs de référence choisi peut être un couple obtenu pour des conditions de projection altérées, par exemple lorsqu'une ou plusieurs buses de projection sont partiellement ou totalement bouchées, et qu'un tel bouchage induit, sur le produit fini qu'est la laine minérale, une perte significative de qualité.

Selon différentes caractéristiques du procédé selon l'invention, prises séparément ou en combinaison :
- lors de l'étape de comparaison, on identifie parmi des abaques regroupant les couples de valeurs de référence une valeur de référence identique à un valeur mesurée dans l'étape de mesure et on compare l'autre valeur du couple de valeurs de référence à l'autre valeur du couple de valeurs mesurées, une étape d'alarme étant générée en cas d'écart significatif entre l'autre valeur mesurée et l'autre valeur de référence comparées.
- le procédé comprend une étape supplémentaire de génération d'un deuxième signal d'alerte dès lors qu'un écart entre un couple de valeurs mesurées de débit et de pression et un couple de valeurs de référence est supérieur à un deuxième seuil d'alerte préalablement défini. Selon différents exemples, ce deuxième signal d'alerte peut prendre la forme d'un signal sonore et/ou lumineux émis dans un poste de contrôle du système de projection de la composition d'encollage, ou bien prendre la forme d'un signal informatique sur un moniteur de contrôle de l'installation de fabrication de laine minérale, ou il peut prendre la forme d'un signal de commande de l'arrêt du procédé de projection de la composition d'encollage sur les fibres minérales.
- le procédé comprend une étape de rétroaction au cours de laquelle une action de traitement de l'état de la couronne est mise en oeuvre, manuellement ou automatiquement, suite au déclenchement de l'un ou l'autre des signaux d'alerte.

Tant par son premier que par son deuxième aspect, l'invention permet, par la mise en oeuvre de moyens simples, un suivi efficace et précis des conditions d'écoulement d'une composition d'encollage destinée à être projetée sur des fibres minérales au travers de buses d'un système de projection. L'invention permet ainsi, pour des coûts réduits, d'augmenter la qualité du produit fini qu'est la laine minérale obtenue après réticulation de la composition d'encollage autour des fibres minérales précitées.

L'invention concerne également une installation de fabrication, notamment de laine minérale, comportant des moyens de fibrage configurés pour amener des fibres à l'intérieur d'un poste d'encollage de ces fibres, caractérisée en ce que le poste d'encollage comporte un système de projection conforme à ce qui vient d'être précédemment décrit.

D'autres caractéristiques, détails et avantages de l'invention apparaitront plus clairement à l'aide de la description qui suit et des dessins parmi lesquels :
[Fig.1] est une représentation schématique d'une partie d'une installation de fabrication selon l'invention, illustrant notamment un poste d'encollage dans lequel un dispositif de contrôle selon l'invention est implanté,
[Fig.2] représente schématiquement un dispositif de contrôle selon l'invention, le dispositif de projection de composition d'encollage étant représenté schématiquement pour rendre visible une répartition des buses de projection,
[Fig.3] représente schématiquement un dispositif de contrôle selon l'invention, le dispositif de projection de composition d'encollage étant représenté de côté pour illustrer un mode de réalisation dans lequel deux couronnes annulaires sont disposées l'une au-dessus de l'autre pour amener séparément dans chaque buse de projection deux fluides formant la composition d'encollage,
[Fig.4] présente schématiquement deux abaques permettant la mise oeuvre du procédé de contrôle selon l'invention,
[Fig.5] illustre schématiquement un exemple de mise en oeuvre du procédé selon l'invention,
[Fig.6] est une représentation par logigramme des étapes principales du procédé de contrôle selon l'invention, et
[Fig.7] illustre schématiquement un autre exemple de mise en oeuvre du procédé selon l'invention.

Il faut tout d'abord noter que si les figures exposent l'invention de manière détaillée pour sa mise en oeuvre, elles peuvent bien entendu servir à mieux définir l'invention le cas échéant. Il est également à noter que, sur l'ensemble des figures, les éléments similaires et/ou remplissant la même fonction sont indiqués par le même repère.

L'invention porte sur la mise en oeuvre d'un dispositif de contrôle de la projection de composition d'encollage et plus particulièrement du contrôle du bouchage de buses de pulvérisation spécifiques pour la pulvérisation d'une telle composition d'encollage, ou liant, particulière sur un tore de fibres et notamment de fibres minérales.

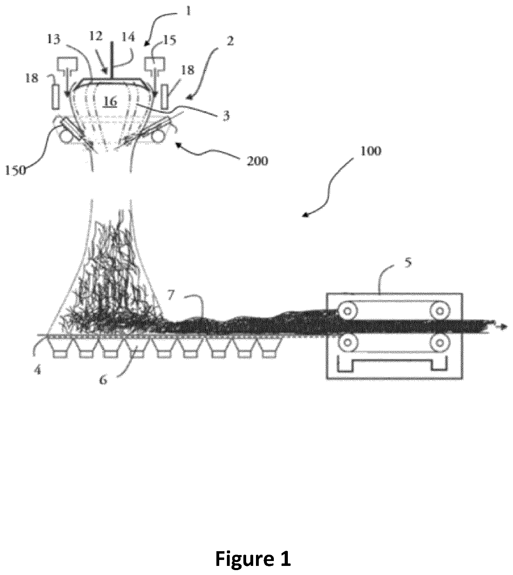

On a illustré sur la figure 1 une partie d'une installation de fabrication 100 de laine minérale, et plus particulièrement de laine de verre, et plus particulièrement différents postes successifs participant à la création d'un matelas isolant composé de fibres de verres encollées composant un matériau isolant de type laine minérale, par exemple laine de verre. Un premier poste, dit poste de fibrage 1, consiste en l'obtention de fibres par l'intermédiaire d'une assiette de centrifugation, en aval de laquelle se trouve un deuxième poste, dit poste d'encollage 2, dans lequel on réalise principalement l'encollage des fibres 300 préalablement obtenues par un liant pour les lier entre elles.

Les fibres encollées se posent dans un poste de formage sur un tapis de convoyage 4, qui les emmène vers une étuve formant un poste de réticulation 5 et à l'intérieur de laquelle elles sont chauffées pour réticuler le liant.

Le tapis de convoyage 4 est perméable aux gaz et à l'eau, et il s'étend au-dessus de caissons d'aspiration 6 des gaz tels que l'air, les fumées et les compositions aqueuses excédentaires issues du processus de fibrage précédemment décrit. Il se forme ainsi sur le tapis de convoyage 4 un matelas 7 de fibres de laine de verre mélangées intimement avec la composition d'encollage. Le matelas 7 est conduit par le tapis de convoyage 4 jusqu'à l'étuve formant le poste de réticulation 5 du liant.

On comprend qu'une telle ligne d'installation est adaptée pour la production de produits à base de fibres de laine de verre, tel que cela va être décrit, mais qu'elle est évidemment adaptée à la production de produits à base de fibres minérales.

Le poste de fibrage 1 est ici configuré pour la mise en oeuvre d'un procédé de fibrage par centrifugation interne. On comprendra que tout type de centrifugation et de centrifugeur associé peut être mis en œuvre avec les enseignements qui vont suivre dès lors que des fibres sont obtenues en sortie du centrifugeur pour leur passage à venir dans le poste d'encollage.

A titre d'exemple illustré sur la figure 1, le verre fondu peut être amené en un filet 14 depuis un four de fusion et d'abord récupéré dans un centrifugeur 12, pour ensuite s'échapper sous la forme d'une multitude de filaments entraînés en rotation. Le centrifugeur 12 est par ailleurs entouré par un brûleur annulaire 15 qui crée à la périphérie de la paroi du centrifugeur un courant gazeux à grande vitesse et à température suffisamment élevée pour étirer les filaments de verre en fibres sous la forme d'un tore 16.

On comprend que l'exemple de poste de fibrage donné ci-dessus est indicatif et non limitatif de l'invention, et que l'on pourra prévoir aussi bien un procédé de fibrage par centrifugation interne avec un panier et une paroi de fond trouée, ou avec une assiette avec un fond plein, dès lors que le verre fondu s'étire par centrifugation pour s'étendre par la suite sous forme de tore de fibres 16 dans le poste d'encollage.

Par ailleurs, le poste de fibrage pourra comprendre des moyens de chauffage 18 servant à maintenir le verre et le centrifugeur à la bonne température.

Le tore de fibres 16 ainsi créé est entouré par une couronne d'un dispositif de projection étant dénommé par la suite système de projection d'une composition d'encollage 200, dont seules deux buses de pulvérisation 150 équipant cette couronne sont représentées sur la figure 1.

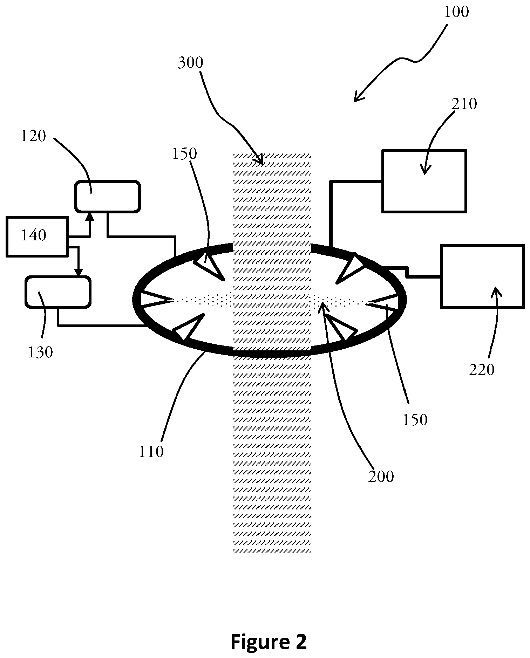

En référence à la figure 2, un système 100 de projection d'une composition d'encollage 200 sur des fibres minérales 300 destinées à former, avec la composition d'encollage 200, une laine minérale non représentée sur la figure 2, comprend au moins une couronne 110, ici annulaire, sur laquelle sont réparties plusieurs buses de projection 150. Selon un exemple, les fibres minérales 300 sont des fibres de verre.

En passant à l'intérieur de la couronne 110, les fibres minérales 300 reçoivent, projetée par les buses de projection 150, une composition d'encollage 200 constituée d'au moins un liant 210 et un pulvérisant 220. Avantageusement, le liant 210 est un fluide polymérisable, et le pulvérisant 220 est un fluide permettant la projection du liant 210 sur les fibres minérales 300, par exemple de l'air comprimé.

On comprend de la représentation schématique de la figure 2 que le liant 210 et le pulvérisant 220 sont acheminés vers la couronne 110 dans laquelle ils sont mélangés avant d'être projetés sur les fibres minérales 300 par les buses de projection 150. Le pulvérisant a pour fonction de transformer le liant en gouttelettes susceptibles de pénétrer dans le tore de fibres et la composition d'encollage une fois mélangée dans les fibres n'est composée essentiellement que du liant.

L'homogénéité et/ou la qualité de la projection de la composition d'encollage 200 sur les fibres minérales 300 peut être affectée par une modification de l'écoulement de cette composition d'encollage au travers d'une ou plusieurs des buses de projection 150. En particulier, par exemple, un bouchage partiel ou total d'une ou plusieurs buses de projection 150 affectera de manière sensible la quantité de composition d'encollage 200 projetée localement sur les fibres minérales 300 défilant dans la couronne 110, ce qui peut induire une perte notable de qualité de la laine minérale finie, une fois la composition d'encollage 200 réticulée dans un poste de réticulation non représenté sur la figure 2.

Selon l'invention, le système de projection 100 comprend un dispositif de contrôle qui comporte un premier appareil 120 et un deuxième appareil 130 respectivement configurés pour mesurer un débit D d'un fluide de la composition d'encollage 200 et une pression P d'un fluide de la composition d'encollage 200. Préférentiellement, mais non exclusivement, le premier appareil 120 et le deuxième appareil 130 sont configurés pour mesurer respectivement un débit et une pression d'un même fluide de la composition d'encollage 200. Dans ce qui suit, l'invention sera décrite et illustrée selon un exemple, non limitatif, dans lequel le premier appareil 120 et le deuxième appareil 130 sont configurés pour mesurer respectivement un débit D et une pression P du liant 210 de la composition d'encollage 200.

Le dispositif de contrôle du système de projection 100 comprend également une unité de commande 140 configurée pour commander la mesure simultanée, respectivement par le premier appareil 120 et par le deuxième appareil 130, d'un débit D du liant 210 et d'une pression P du liant 210.

Selon l'exemple plus particulièrement illustré par la figure 2, le premier appareil 120 et le deuxième appareil 130 sont configurés pour effectuer les mesures précitées au sein de la couronne 110 sur laquelle sont réparties les buses de projection 150.

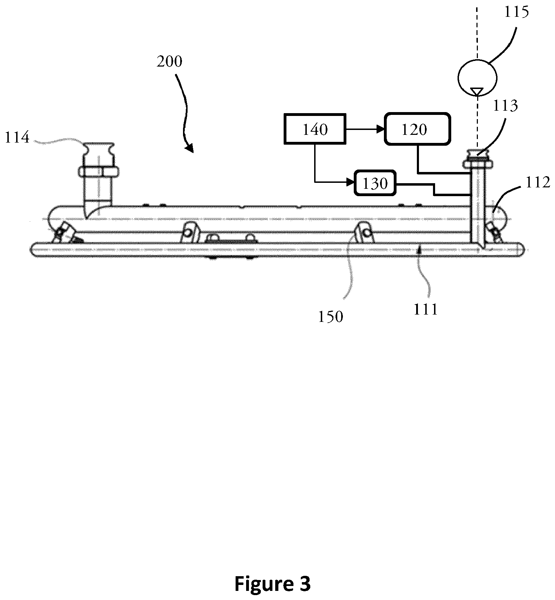

Un exemple de réalisation de la couronne 110 sous forme de couronne annulaire est plus particulièrement illustré sur la figure 3, sans que cette forme annulaire soit limitative de l'invention.

Dans l'exemple illustré, la couronne comporte notamment un premier tube annulaire 111 à l'intérieur duquel un premier conduit de distribution est ménagé pour permettre une circulation du liant 210, ainsi qu'un deuxième tube annulaire 112 à l'intérieur duquel un deuxième conduit de distribution est ménagé pour permettre une circulation d'air comprimé, susceptible de projeter le liant sur les fibres via les buses de projection.

Chaque tube annulaire 111, 112 présente une forme tubulaire dont la paroi interne présente une section constante, ou sensiblement constante sur tout le pourtour du tube. Par section sensiblement constante, on entend une section qui reste la même avec une marge d'écartement inférieur à 5%.

Le premier tube annulaire 111 comporte un tuyau d'alimentation 113 du liant, relié à son autre extrémité à un réservoir de ce liant. Le liant peut notamment consister en un liant à faible teneur en formaldéhyde, de préférence même sans formaldéhyde, que l'on peut qualifier de liant à base de produits biosourcés, ou « liant vert ». La mesure de la pression et du débit de liant est réalisée dans ce tuyau d'alimentation, en amont du conduit de distribution formé dans le premier tube annulaire 111. Bien entendu, d'autres zones pourraient être choisies sans sortir du contexte de l'invention pour réaliser le raccordement du premier appareil 120 et du deuxième appareil 130.

Le premier tube annulaire 111 comporte également une pluralité d'orifices de sortie régulièrement répartis sur tout le pourtour du premier tube annulaire et débouchant chacun sur une buse de projection 150 agencée pour être en communication fluidique avec le conduit de distribution formé dans le premier tube annulaire 111 via l'orifice de sortie correspondant.

De façon analogue au premier tube annulaire, le deuxième tube annulaire 112 comporte un raccord d'alimentation 114 pour une arrivée d'air comprimé. Le cas échéant, des appareils de mesure, complémentaires à ceux évoqués précédemment, pourraient être raccordés au niveau de ce raccord d'alimentation pour permettre une mesure de pression et de débit de l'air présent dans la composition d'encollage à projeter.

On comprend que le deuxième tube annulaire 112 délimitant le deuxième conduit de distribution 26 comporte également une pluralité d'orifices de sortie, chacune des buses de pulvérisation étant en communication fluidique avec le conduit de distribution formé dans le deuxième tube annulaire via ces orifices.

Chaque buse de projection comporte un corps qui s'étend ainsi entre les tubes annulaires de la couronne, ladite buse étant configurée permettre le mélange de liant et d'air et assurer la projection d'une composition d'encollage selon des proportions d'air par rapport au liant appropriées.

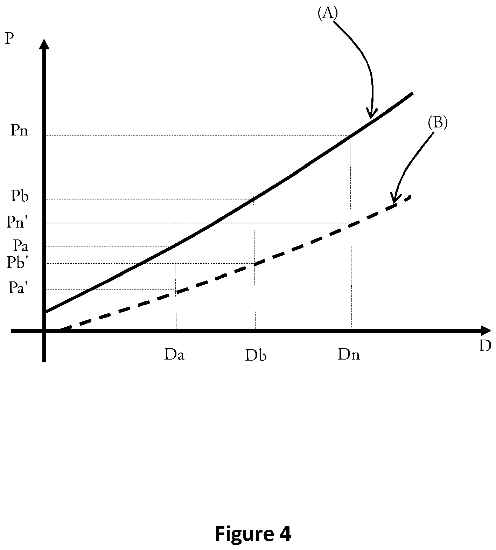

La figure 4 présente un exemple d'évolution de la pression P du liant 210 en fonction du débit D de ce même liant 210 pour différents paramètres opérationnels du système de projection 100. En d'autres termes, la figure 4 présente schématiquement deux exemples d'abaques tels que précédemment définis.

La courbe (A) en trait plein sur la figure 4 illustre ainsi, par exemple, les valeurs que prennent la pression P et le débit D du liant 210 pour un premier ensemble de valeurs de paramètres opérationnels du système de projection 100. Selon un exemple, la courbe en trait plein (A) est établie pour un type prédéfini de buses de projection, dans des conditions normales de projection telles que précédemment définies, et pour des premières proportions de liant 210 et de pulvérisant 220 dans la composition d'encollage projetée 200, correspondant à un premier ensemble de propriétés de la laine minérale finie, par exemple des propriétés mécaniques spécifiques. A chaque valeur (Da, Db, ...Dn) du débit de liant 210 correspond donc, pour ce premier ensemble de valeurs des paramètres opérationnels précités, une valeur unique (Pa, Pb ... Pn) de la pression du liant 210.

De manière similaire, la courbe (B) en trait discontinu sur la figure 4 illustre, par exemple, les valeurs que prennent le débit D et la pression P du liant 210 pour un deuxième ensemble de valeurs des mêmes paramètres opérationnels du système de projection 100 que ceux définis pour l'établissement de la courbe (A) en trait plein. Selon un exemple, la courbe en trait discontinu (B) est établie pour un type prédéfini de buses de projection, dans des conditions normales de projection, et pour des deuxièmes proportions de liant 210 et de pulvérisant 220 dans la composition d'encollage projetée 200, correspondant à un deuxième ensemble de propriétés de la laine minérale finie, par exemple des propriétés acoustiques spécifiques. A chaque valeur (Da, Db, ... Dn) du débit de liant 210 correspond donc, pour ce deuxième ensemble de valeur des paramètres opérationnels, une valeur unique (Pa', Pb', ... Pn') de pression du liant 210.

Il faut donc bien comprendre ici que les courbes illustrées sur la figure 4 présentent, pour différentes valeurs d'un ou plusieurs paramètres opérationnels du système de projection 100, l'évolution de la pression P du liant 210 en fonction de conditions opératoires du système de projection 100, c'est-à-dire, par exemple, en fonction d'une vitesse de défilement des fibres minérales 300 dans la couronne 110, indépendamment de toute modification des conditions locales d'écoulement de la composition d'encollage au travers des buses de projection 150. En d'autres termes, les abaques présentés par la figure 4 ne prennent pas en compte une évolution temporelle du débit D et de la pression P du liant 210, par exemple sous l'effet de modifications progressives des conditions d'écoulement de ce liant 210 dans la couronne 110 au cours du processus de projection de la composition d'encollage 200.

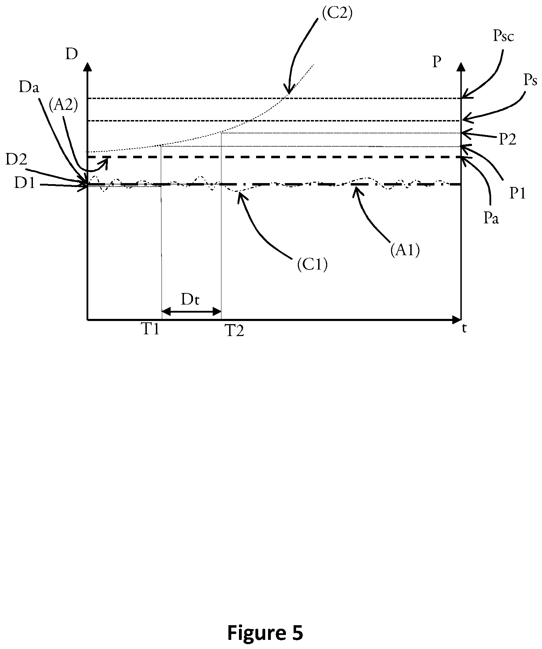

La figure 5 illustre un exemple d'évolution temporelle, lors d'une opération de projection de la composition d'encollage 200 sur des fibres minérales 300 défilant à l'intérieur de la couronne 110 et pour un débit D du liant 210 maintenu constant, de la pression P du liant 210, le débit D et la pression P étant respectivement mesurés par le premier appareil 120 et par le deuxième appareil 130.

Sur cette figure, la courbe (A1) en traits mixtes épais représente l'évolution, en fonction du temps t, d'une première valeur Da du débit du liant 210, et la courbe (A2) en trait discontinu épais représente l'évolution, en fonction du temps t, d'une première valeur Pa de la pression du liant 210. Les valeurs Da, Pa, précitées sont obtenues à partir d'un abaque tel que, par exemple, celui illustré par la courbe (A) en trait plein sur la figure 4. Par exemple, la première valeur Pa de la pression du liant 210 est donnée, par l'abaque (A) précédemment défini et représenté sur la figure 4, à partir d'une première valeur prédéfinie Da du débit du liant 210. La valeur Da précitée est, par exemple, représentative d'un ensemble prédéfini de conditions opératoires du système de projection 100, c'est-à-dire d'un ensemble prédéfini de conditions de mise en oeuvre, par le système de projection 100, des paramètres opérationnels pour lesquels l'abaque (A) a été établi. Le couple formé par les valeurs (Da, Pa) précitées constitue ainsi un couple de valeurs de référence, représentatives à la fois d'un ensemble prédéfini de valeurs de paramètres opérationnels du système de projection 100 et d'un ensemble de conditions opératoires préalablement déterminées du système de projection 100.

Il résulte de ce qui précède que les valeurs de référence Da, Pa, respectivement du débit du liant 210 et de la pression de celui-ci, qui sont des valeurs théoriques du débit et de la pression précités pour les paramètres opérationnels et les conditions opératoires choisies, sont sensiblement constantes au cours du temps.

Sur la figure 5, la courbe (C1) en traits mixtes fins représente l'évolution temporelle du débit D du liant 210, mesuré par le premier appareil 120 précédemment défini, et la courbe (C2) en trait discontinu représente l'évolution temporelle de la pression P du liant 210, mesurée simultanément par le deuxième appareil 130 précédemment défini.

Comme indiqué précédemment, l'invention prévoit que le débit D et la pression P sont mesurés simultanément respectivement par le premier appareil 120 et par le deuxième appareil 130. Et tel qu'illustré, le débit D du liant est ici maintenu constant par l'intermédiaire d'un pilotage approprié d'une pompe 115 d'alimentation du liant dans le dispositif. A titre d'exemple, la pompe est pilotée pour qu'un débit de liant constant de l'ordre de 1500 litres par heure soit obtenu. Il a été illustré sur la figure quelques légères variations du débit autour de la valeur de référence Da et il sera compris que ces variations sont minimes par rapport à la valeur nominale du débit de sorte que ce débit est estimé constant.

Les mesures de débit et de pression de liant sont réalisées en temps réel et la figure 5 illustre deux de ces mesures réalisées à un intervalle de temps Dt. A un premier instant Tl, une première mesure est effectuée d'un premier couple de valeurs formé d'une première valeur D1 du débit de liant 210, sensiblement égale à la valeur de débit de référence Da, et d'une première valeur P1 de la pression de liant 210, et à un deuxième instant T2, une deuxième mesure est effectuée d'un deuxième couple de valeurs formé d'une deuxième valeur D2 du débit de liant 210, ici égale à la valeur de débit de référence Da, et d'une deuxième valeur P2 de la pression de liant 210.

Selon l'invention, l'unité de commande 140 précédemment définie est configurée pour générer un premier signal d'alerte dès lors qu'un écart entre couple de valeurs mesurées (D1, P1) et couple de valeurs de référence (Da, Pa) est supérieur à un premier seuil d'alerte. Comme décrit précédemment, l'écart précité peut, selon un exemple, être constaté pour l'une des grandeurs mesurées, et plus particulièrement la pression P pour un débit D maintenu constant. Selon cet exemple, plus particulièrement illustré par la figure 5, on définit un premier seuil d'alerte Ps pour la pression P de liant 210. Dès lors que la grandeur mesurée de pression du liant franchit le premier seuil d'alerte P, l'invention prévoit qu'un premier signal d'alerte est généré. Le premier signal d'alerte précédemment sera donc émis dès lors qu'une valeur mesurée de la pression P sera supérieure au premier seuil d'alerte P. Un tel premier signal d'alerte peut, par exemple, prendre la forme d'un signal sonore et/ou visuel émis dans un poste de contrôle du système de projection 100.

On comprend ici l'intérêt de l'invention pour la détection précoce de toute altération des conditions d'écoulement de la composition d'encollage 200 au travers des buses de projection 150 précédemment définies. En effet, pour un débit D du liant 210 maintenu constant, la pression P correspondante est significativement affectée par une modification des conditions d'écoulement de la composition d'encollage 200 au travers des buses de projection 150, et plus particulièrement par un bouchage d'une ou plusieurs buses. Les inventeurs ont notamment pu démontrer que l'effet d'une réduction de section de passage sur la pression du fluide s'écoulant dans ce passage est bien plus important que l'effet d'un agrandissement de la section de passage de la cape à air de la buse, c'est-à-dire de la fente par laquelle passe le mélange air et liant formant la composition d'encollage. A titre d'exemple, si la cape à air d'une buse est érodée et que la fente par laquelle est projetée la composition d'encollage est ainsi élargie, la diminution de pression qui en résulte, à débit constant du liant, est limitée et ne compense pas l'augmentation de pression qui résulterait d'une buse bouchée. En d'autres termes, la valeur de la pression P du liant 210 peut être rapidement fortement affectée par un bouchage, partiel ou total, d'une ou plusieurs buses de projection 150, alors que cette valeur de pression n'est que faiblement affectée par un élargissement de la section de passage de la cape à air. Ainsi, selon l'invention, on s'assure de la détection d'un bouchage d'une buse même si des buses voisines ont une altération ayant un effet contraire.

Le dépassement d'un seuil d'alerte pourra indiquer qu'une ou plusieurs buses sont complètement bouchées, ou bien que l'ensemble des buses est partiellement bouchée. Dans chacun des cas, une action corrective peut être mise en oeuvre pour revenir à des conditions de projection de la composition d'encollage plus proche des conditions théoriques souhaitées. En effectuant en temps réel une mesure simultanée des valeurs du débit D et de la pression P du liant 210, et en comparant ce couple de valeurs à un couple de valeurs de référence, l'invention permet une détection rapide de toute modification des conditions d'écoulement de la composition d'encollage 200 au travers des buses de projection 150, quelle qu'en soit la cause.

A titre d'exemple, le nombre de buses de pulvérisation prévues sur la couronne, ici annulaire, dédiée à la projection de la composition d'encollage peut être égal à sept ou neuf pour un premier type de buses et égal à seize ou vingt-quatre pour un deuxième type de buses.

Comme le montre la figure 5, l'invention prévoit également la définition d'un deuxième seuil d'alerte. Selon l'exemple illustré par la figure 5, le deuxième seuil d'alerte prend la forme d'un deuxième couple de valeurs, respectivement du débit D et de la pression P du liant 210 de la composition d'encollage 200, correspondant plus particulièrement à une valeur de pression seuil critique Psc supérieure à la valeur seuil Ps précédemment décrite et à un débit D maintenu constant. Dès lors que la valeur mesurée de pression P franchit le deuxième seuil d'alerte Psc, un deuxième signal d'alerte est généré par l'unité de commande 140 précédemment définie. Selon un exemple, le deuxième signal d'alerte peut prendre la forme d'une commande simultanée de l'arrêt du défilement des fibres minérales 300 dans la couronne 110 et de l'arrêt de la projection de la composition d'encollage 200 par les buses de projection 150.

Dans les deux exemples de réalisation ici illustrés, une comparaison de la valeur mesurée pour le débit et la pression d'un fluide, ici le liant, est réalisée simultanément et respectivement avec la valeur de référence correspondante.

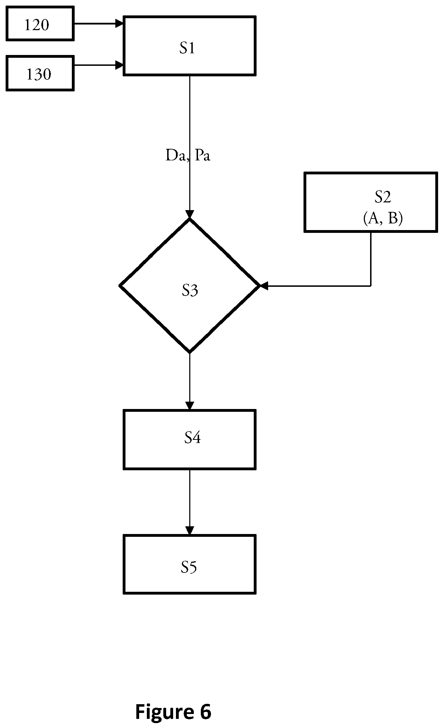

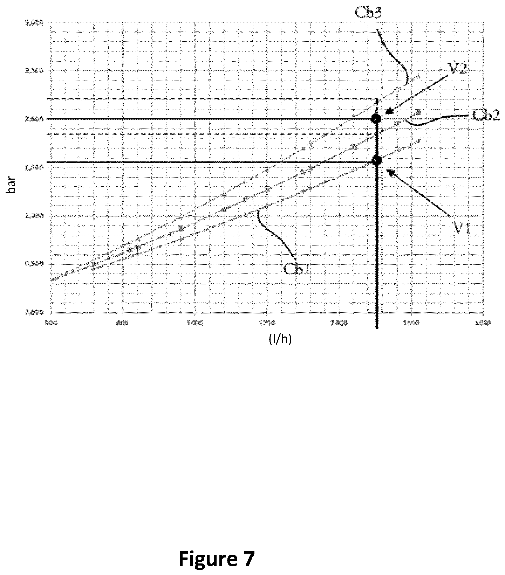

Un autre exemple de réalisation est illustré sur les figures 6 et 7.

Conformément à ce qui a été précédemment décrit, on récupère à un instant donné un couple de valeurs mesurées D1, P1 lors d'une étape de mesure S1. On associe ce couple de valeurs avec un abaque précédemment établi et stocké dans une unité de mémoire du dispositif de contrôle, l'abaque (A,B) étant choisi lors d'une étape d'association S2 comme celui correspondant à l'ensemble prédéfini de paramètres opérationnels du dispositif de projection utilisé lors de la mesure. A titre d'exemple, le procédé de contrôle étant ici mis en oeuvre pour une couronne équipée de six buses de projection d'un premier type donné et pour des conditions de projection déterminées avec notamment un ratio air/liquide dans la composition d'encollage de l'ordre de 0.25, l'abaque choisi est l'abaque (A) établi dans ces conditions de projection et avec ce type de couronne.

Dans ce qui suit, il va être choisi de lire dans le couple de valeurs mesurées la valeur de pression en fonction de la valeur de débit, conformément à ce qui a été décrit jusqu'ici avec un débit maintenu constant par un pilotage approprié de la pompe permettant l'alimentation du liant, étant entendu que cela pourrait être l'inverse sans sortir du contexte de l'invention.

Lors d'une étape de comparaison S3, l'unité de commande 140 identifie parmi le couple de valeurs mesurée la valeur de débit, ici dans l'exemple tel qu'illustré sur la figure 7 égale à 1500 l/h. L'unité de commande identifie dans l'abaque sélectionné une valeur de pression de référence correspondante et il compare la valeur de pression mesurée par rapport à cette valeur de pression de référence, pour la valeur de débit figée. En cas d'écart significatif entre la valeur de pression mesurée et la valeur de pression de référence, pour une valeur de débit mesurée, une étape d'alarme S4 est générée.

Une étape de rétroaction S5 est alors générée suite à cette étape d'alarme S4. Tel que cela a pu être précisé précédemment, cette étape de rétroaction consiste à traiter la couronne et notamment ses buses de projection pour éliminer complètement ou réduire le bouchage de la buse. Par exemple, une étape de jet d'air comprimé peut être mise en oeuvre de façon automatique dès qu'une alarme est générée.

La figure 7 illustre un abaque spécifique dans lequel sont identifiées trois courbes Cb1, Cb2 et Cb3 identifiant des couples de valeurs pression/débit de référence dans le cas où respectivement, aucune buse n'est bouchée, deux buses sont bouchées et quatre buses sont bouchées. On comprend que le nombre de buses bouchées est ici donnée à titre d'exemple et que l'objet de cet abaque spécifique est d'identifier des couples de valeurs de référence dans des situations de buse(s) bouchées.

L'intérêt d'un tel abaque dans le procédé de contrôle selon l'invention est décrit par la suite en fonction de deux résultats de mesure différents.

Dans un premier cas, lors d'une première étape de mesure S1, un couple de valeurs V1 est mesuré avec un débit de liant de l'ordre de 1500 l/h et une pression de liant de l'ordre de 1,6 bars. Lors de l'étape de comparaison S2, l'unité de commande 140 choisit l'abaque approprié en fonction des conditions de projection de liant et il passe ensuite à l'étape de comparaison S3. Dans cette étape, l'unité de commande associe à la valeur de référence de débit égale à celle mesurée, ici 1500 l/h plusieurs valeurs de référence issues de la lecture des courbes Cb1, Cb2 Cb3 relatives aux bouchages de buses.

Ainsi, pour un débit de liant égal à 1500 1/h, une pression de 1,6 bars correspond à une configuration sans buse bouchée, une pression de 1.8 bars correspond à une configuration à deux bouches busées, et une pression de 2,2 bars correspond à une configuration à quatre buses bouchées. Dans l'étape de comparaison S3, l'unité de commande compare la valeur de pression de liant mesurée qui est dans ce premier cas égale à 1.6 bars. Il en résulte que le dispositif de projection n'a aucune bouchée.

Dans le deuxième cas, lors d'une première étape de mesure S1, un couple de valeurs V2 est mesuré avec un débit de liant de l'ordre de 1500 l/h et une pression de liant de l'ordre de 2 bars. Le même abaque est sélectionné par l'unité de commande car les conditions de projection sont les mêmes, et la comparaison réalisée par l'unité de commande indique que le couple de valeurs mesurées est révélateur d'une configuration telle qu'au moins deux buses sont bouchées et que le nombre de buses bouchées est inférieure à quatre. Le procédé de contrôle peut envoyer une information à l'utilisateur comme quoi il semble que trois buses sont bouchées. Dans ce qui précède, le résultat de l'étape de comparaison permet de déduire un nombre de buses bouchées en considérant que les buses sont entièrement bouchées. Il convient de noter que le dispositif de contrôle selon l'invention permet également de renvoyer une information de bouchage de buses à un utilisateur lorsque les buses ne sont bouchées que partiellement, ou bien lorsque c'est la section de passage dans la couronne du dispositif de projection qui est partiellement réduite. Si de tels bouchages partiels sont répartis sur suffisamment de différentes buses, l'effet sur la pression du liant pour un débit donné peut être équivalent à l'effet sur la pression du liant du bouchage complet de quelques buses. Le dispositif de contrôle selon l'invention peut ainsi permettre d'avoir un suivi d'encrassement de l'équipement dans le temps et/ou de suivre l'évolution de la surface de passage.

L'invention, telle qu'elle vient d'être décrite, permet donc, par des moyens simples, de réaliser une détection rapide des conditions d'écoulement d'une composition d'encollage 200 au travers de buses de projection 150, en vue de la projection d'une telle composition d'encollage 200 sur des fibres minérales 300 pour réaliser une laine minérale.

L'invention ne saurait toutefois se limiter aux moyens et configurations décrits et illustrés, et elle s'applique également à tous moyens ou configurations couverts par le texte des revendications annexées.

Par exemple, et de manière non limitative, il est à noter que l'invention s'applique également quels que soient les fluides de la composition d'encollage dont débit et pression sont simultanément mesurés par le premier appareil de mesure 120 et par le deuxième appareil de mesure 130. Ainsi, à titre d'exemple non limitatif, des abaques utilisés pour la mise en oeuvre du procédé selon l'invention peuvent être établis à partir d'un débit D du liant 210 et d'une pression P du pulvérisant 220 de la composition d'encollage 200, notamment parce que le dispositif comporte des moyens de réglage apte à faire respecter pendant toute la durée de la projection une proportion constante du pulvérisant par rapport au liant, ou en d'autres termes un ratio air/liquide constant.

Une autre variante peut consister par exemple dans le type de buses utilisées dans le système de projection et dans la composition d'encollage destinée à être projetée par ces buses. Le dispositif de contrôle selon l'invention pourra ainsi être mis en oeuvre avec des buses dites airless, c'est-à-dire des buses configurées pour projeter le liant sans apport d'air comprimé formant un pulvérisant. Conformément à ce qui a été décrit précédemment, le dispositif de contrôle consiste à mesurer le débit et la pression du liant et à comparer les valeurs mesurées à des valeurs de référence.

## Revendications

1. Système de projection (100) d'une composition d'encollage (200) sur des fibres minérales (300), le système de projection (100) comprenant au moins une couronne (110) à l'intérieur de laquelle les fibres minérales (300) sont destinées à passer, ainsi qu'au moins une buse de projection (150) agencée sur l'au moins une couronne (110) et configurée pour projeter la composition d'encollage (200) sur les fibres minérales (300), le système de projection (100) comportant un dispositif de contrôle comprenant au moins un premier appareil (120) configuré pour mesurer un débit (D) d'un fluide (210, 220) relatif à la composition d'encollage projetée (200) et un deuxième appareil (130) configuré pour mesurer une pression (P) d'un fluide (210, 220) relatif à la composition d'encollage projetée (200), ainsi qu'un module configuré pour comparer au moins un couple formé par une valeur (D1, D2, Dn), mesurée par le premier appareil (120), du débit de fluide et une valeur (P1, P2, Pn), mesurée par le deuxième appareil (130), de la pression de fluide, avec au moins un couple formé par une première valeur de référence (Da), préalablement définie, de débit du fluide (210, 220) considéré, et par une deuxième valeur de référence (Pa), préalablement définie, de la pression du fluide (210, 220) considéré, le système de projection comportant au moins une pompe (115) d'alimentation du fluide piloté de sorte qu'une valeur de débit du fluide est maintenue constante.

2. Système de projection (100) selon la revendication précédente, **caractérisé en ce qu'**il comprend une unité de commande (140) configurée pour commander le premier appareil (120) et le deuxième appareil (130) à mesurer simultanément respectivement un débit (D) d'un fluide (210, 220) de la composition d'encollage (200) et une pression (P) d'un fluide (210, 220) de la composition d'encollage (200) en temps réel.

3. Système de projection (100) selon la revendication précédente, **caractérisé en ce que** l'unité de commande (140) est configurée pour générer un premier signal d'alerte dès lors qu'un écart entre un couple de valeurs mesurées (D1, P1, D2, P2, Dn, Pn) de débit (D) et de pression (P) de fluide et un couple de valeurs de référence (Da, Pa) de débit (D) et de pression (P) de fluide franchit un premier seuil d'alerte prédéfini.

4. Système de projection (100) selon l'une quelconque des revendications 2 ou 3, **caractérisé en ce que** l'unité de commande (140) est configurée pour générer un deuxième signal d'alerte dès lors qu'un écart entre un couple de valeurs mesurées (D1, P1, D2, P2, Dn, Pn) de débit (D) et de pression (P) de fluide (210, 220) et un couple de valeurs de référence (Da, Pa) de débit (D) et de pression (P) de fluide (210, 220) est supérieur à un deuxième seuil d'alerte préalablement défini.

5. Système de projection (100) selon l'une quelconque des revendications précédentes, **caractérisé en ce que** le premier appareil (120) est configuré pour mesurer un débit (D) d'un liant formant un fluide incompressible de la composition d'encollage projetée (200) et **en ce que** le deuxième appareil (130) est configuré pour mesurer une pression (P) de ce liant.

6. Système de projection (100) selon l'une quelconque des revendications 1 à 5, **caractérisé en ce que** le système de projection comporte des moyens de maintien d'un ratio constant entre les fluides composant la composition d'encollage et **en ce que** l'un des appareils est configuré pour mesurer une valeur de débit, respectivement de pression, d'un liant formant un fluide incompressible de la composition d'encollage projetée (200) tandis que l'autre appareil est configuré pour mesurer une valeur de pression, respectivement de débit, d'air formant un deuxième fluide de la composition d'encollage.

7. Installation de fabrication, notamment de laine minérale (100), comportant des moyens de fibrage configurés pour amener des fibres à l'intérieur d'un poste d'encollage (2) de ces fibres, **caractérisée en ce que** le poste d'encollage comporte un système de projection (100) conforme à l'une des revendications précédentes.

8. Procédé de contrôle de la qualité de projection d'une composition d'encollage (200) sur des fibres minérales (300), comprenant au moins :
- une étape de définition d'une pluralité de couples de valeurs de référence (Da, Pa, Db, Pb, ... Dn, Pn) respectivement d'un débit (D) d'un fluide (210, 220) de la composition d'encollage (200) et d'une pression (P) d'un fluide (210, 220) de la composition d'encollage (200),
- une étape de mesure (S1) simultanée, respectivement par un premier appareil (120) et par un deuxième appareil (130) d'un système de projection (100) selon l'une quelconque des revendications 1 à 6, d'une valeur (D1, D2, Dn) d'un débit (D) d'un fluide (210, 220) de la composition d'encollage (200) et d'une valeur (P1, P2, Pn) d'une pression (P) d'un fluide (210, 220) de la composition d'encollage (200),
- une étape de comparaison (S3) d'un couple (D1, P1, D2, P2, Dn, Pn) formé par une valeur mesurée (D1, D2, Dn) de débit de fluide et une valeur mesurée (P1, P2, Pn) de pression de fluide avec au moins un couple de valeurs de référence (Da, Pa) de débit de fluide et de pression de fluide,
- l'alimentation du fluide de la composition d'encollage étant pilotée par une pompe de sorte qu'une valeur de débit du fluide est maintenue constante.

9. Procédé selon la revendication précédente, dans lequel lors de l'étape de comparaison (S3), on identifie parmi des abaques regroupant les couples de valeurs de référence une valeur de référence identique à un valeur mesurée dans l'étape de mesure (S1) et on compare l'autre valeur du couple de valeurs de référence à l'autre valeur du couple de valeurs mesurées, une étape d'alarme (S4) étant générée en cas d'écart significatif entre la valeur de mesurée et la valeur de de référence comparées.

10. Procédé selon l'une des revendications 8 ou 9, comprenant une étape de rétroaction au cours de laquelle une action de traitement de l'état de la couronne est mise en oeuvre, manuellement ou automatiquement, suite au déclenchement d'un signal d'alerte.

## Patentansprüche

1. System zum Spritzen (100) einer Leimzusammensetzung (200) auf Mineralfasern (300), wobei das Spritzsystem (100) mindestens einen Kranz (110), durch dessen Inneres die Mineralfasern (300) hindurchgehen sollen, sowie mindestens eine Spritzdüse (150), die an dem mindestens einen Kranz (110) angeordnet ist und dazu konfiguriert ist, die Leimzusammensetzung (200) auf die Mineralfasern (300) zu spritzen, beinhaltet, wobei das Spritzsystem (100) Folgendes umfasst: eine Kontrollvorrichtung, die mindestens eine erste Einrichtung (120), die dazu konfiguriert ist, eine Menge (D) eines Fluids (210, 220) in Bezug auf die gespritzte Leimzusammensetzung (200) zu messen, und eine zweite Einrichtung (130), die dazu konfiguriert ist, einen Druck (P) eines Fluids (210, 220) in Bezug auf die gespritzte Leimzusammensetzung (200) zu messen, beinhaltet, sowie ein Modul, das dazu konfiguriert ist, mindestens ein Paar, das aus einem Wert (D1, D2, Dn), gemessen durch die erste Einrichtung (120), der Fluidmenge und einem Wert (P1, P2, Pn), gemessen durch die zweite Einrichtung (130), des Fluiddrucks gebildet ist, mit mindestens einem Paar, das aus einem vorab definierten ersten Referenzwert (Da) einer Menge des betrachteten Fluids (210, 220) und einem vorab definierten zweiten Referenzwert (Pa) des Drucks des betrachteten Fluids (210, 220) gebildet ist, zu vergleichen, wobei das Spritzsystem mindestens eine Pumpe (115) für eine Zuführung des Fluids umfasst, die so angesteuert wird, dass ein Mengenwert des Fluids konstant gehalten wird.

2. Spritzsystem (100) nach dem vorhergehenden Anspruch, **dadurch gekennzeichnet, dass** es eine Steuereinheit (140) beinhaltet, die dazu konfiguriert ist, die erste Einrichtung (120) und die zweite Einrichtung (130) so zu steuern, dass diese jeweils eine Menge (D) eines Fluids (210, 220) der Leimzusammensetzung (200) und einen Druck (P) eines Fluids (210, 220) der Leimzusammensetzung (200) simultan in Echtzeit messen.

3. Spritzsystem (100) nach dem vorhergehenden Anspruch, **dadurch gekennzeichnet, dass** die Steuereinheit (140) dazu konfiguriert ist, ein erstes Alarmsignal zu generieren, sobald eine Abweichung zwischen einem Paar gemessener Werte (D1, P1, D2, P2, Dn, Pn) einer Menge (D) und eines Drucks (P) eines Fluids und einem Paar von Referenzwerten (Da, Pa) einer Menge (D) und eines Drucks (P) eines Fluids eine vordefinierte erste Alarmschwelle überschreitet.

4. Spritzsystem (100) nach einem beliebigen der Ansprüche 2 oder 3, **dadurch gekennzeichnet, dass** die Steuereinheit (140) dazu konfiguriert ist, ein zweites Alarmsignal zu generieren, sobald eine Abweichung zwischen einem Paar gemessener Werte (D1, P1, D2, P2, Dn, Pn) einer Menge (D) und eines Drucks (P) eines Fluids (210, 220) und einem Paar von Referenzwerten (Da, Pa) einer Menge (D) und eines Drucks (P) eines Fluids (210, 220) größer als eine vorab definierte zweite Alarmschwelle ist.

5. Spritzsystem (100) nach einem beliebigen der vorhergehenden Ansprüche, **dadurch gekennzeichnet, dass** die erste Einrichtung (120) dazu konfiguriert ist, eine Menge (D) eines Bindemittels, das ein inkompressibles Fluid der gespritzten Leimzusammensetzung (200) bildet, zu messen, und dass die zweite Einrichtung (130) dazu konfiguriert ist, einen Druck (P) dieses Bindemittels zu messen.

6. Spritzsystem (100) nach einem beliebigen der Ansprüche 1 bis 5, **dadurch gekennzeichnet, dass** das Spritzsystem Mittel zur Aufrechterhaltung eines konstanten Verhältnisses zwischen den Fluiden, aus denen die Leimzusammensetzung zusammengesetzt ist, umfasst und dass eine der Einrichtungen dazu konfiguriert ist, einen Mengen- bzw. einen Druckwert eines Bindemittels, das ein inkompressibles Fluid der gespritzten Leimzusammensetzung (200) bildet, zu messen, während die andere Einrichtung dazu konfiguriert ist, einen Druck- bzw. einen Mengenwert von Luft, die ein zweites Fluid der Leimzusammensetzung bildet, zu messen.

7. Anlage zur Herstellung, insbesondere von Mineralwolle (100), die Faserziehmittel umfasst, die dazu konfiguriert sind, Fasern in das Innere einer Station zum Auftragen von Leim (2) auf diese Fasern zu führen, **dadurch gekennzeichnet, dass** die Leimauftragsstation ein Spritzsystem (100) nach einem der vorhergehenden Ansprüche umfasst.

8. Verfahren zur Kontrolle der Spritzqualität einer Leimzusammensetzung (200) auf Mineralfasern (300), das mindestens Folgendes beinhaltet:
- einen Schritt des Definierens einer Vielzahl von Paaren von Referenzwerten (Da, Pa, Db, Pb, ... Dn, Pn) jeweils einer Menge (D) eines Fluids (210, 220) der Leimzusammensetzung (200) und eines Drucks (P) eines Fluids (210, 220) der Leimzusammensetzung (200),
- einen Schritt des simultanen Messens (S1), durch jeweils eine erste Einrichtung (120) und eine zweite Einrichtung (130) eines Spritzsystems (100) nach einem beliebigen der Ansprüche 1 bis 6, eines Werts (D1, D2, Dn) einer Menge (D) eines Fluids (210, 220) der Leimzusammensetzung (200) und eines Werts (P1, P2, Pn) eines Drucks (P) eines Fluids (210, 220) der Leimzusammensetzung (200),
- einen Schritt des Vergleichens (S3) eines Paares (D1, P1, D2, P2, Dn, Pn), das aus einem gemessenen Wert (D1, D2, Dn) einer Fluidmenge und einem gemessenen Wert (P1, P2, Pn) eines Fluiddrucks gebildet ist, mit mindestens einem Paar von Referenzwerten (Da, Pa) einer Fluidmenge und eines Fluiddrucks,
wobei die Zuführung des Fluids der Leimzusammensetzung durch eine Pumpe so angesteuert wird, dass ein Mengenwert des Fluids konstant gehalten wird.

9. Verfahren nach dem vorhergehenden Anspruch, wobei während des Schritts des Vergleichens (S3) aus Tafeln, die die Paare von Referenzwerten enthalten, ein Referenzwert ermittelt wird, der mit einem in dem Schritt des Messens (S1) gemessenen Wert identisch ist, und der andere Wert des Paares von Referenzwerten mit dem anderen Wert des Paares von gemessenen Werten verglichen wird, wobei ein Alarmschritt (S4) generiert wird, wenn eine wesentliche Abweichung zwischen verglichenem Messwert und Referenzwert besteht.

10. Verfahren nach einem der Ansprüche 8 oder 9, das einen Reaktionsschritt beinhaltet, während dessen im Anschluss an die Ausgabe eines Alarmsignals eine Aktion zur Behandlung des Zustands des Kranzes manuell oder automatisch umgesetzt wird.

## Claims

1. A system (100) for spraying a bonding composition (200) onto mineral fibers (300), the spraying system (100) comprising at least one ring (110), inside which the mineral fibers (300) are intended to pass, as well as at least one spray nozzle (150) arranged on the at least one ring (110) and configured to spray the bonding composition (200) onto the mineral fibers (300), the spraying system comprising at least one first apparatus (120) configured to measure a flow (D) of a fluid (210, 220) relative to the sprayed bonding composition (200) and a second apparatus (130) configured to measure a pressure (P) of a fluid (210, 220) relative to the sprayed bonding composition (200), as well as a module configured to compare at least one pair formed by a value (D1, D2, Dn), measured by the first apparatus (120), of the fluid flow and a value (P1, P2, Pn), measured by the second apparatus (130), of the fluid pressure, with at least one pair formed by a first previously defined reference value (Da) of a considered fluid flow (210, 220), and by a second previously defined reference value (Pa) of the considered fluid pressure (210, 220), the spraying system comprising at least a pump (115) for feeding the fluid which is controlled so that a value of the flow of the fluid is constant.

2. The spraying system as claimed in the preceding claim, wherein it comprises a command unit (140) configured to command the first apparatus (120) and the second apparatus (130) to respectively simultaneously measure a flow (D) of a fluid (210, 220) of the bonding composition (200) and a pressure (P) of a fluid (210, 220) of the bonding composition (200) in real time.

3. The spraying system as claimed in any one of the preceding claims, wherein the command unit (140) is configured to generate a first warning signal as soon as a difference between a pair of measured values (D1, P1, D2, P2, Dn, Pn) of fluid flow (D) and pressure (P) and a pair of reference values (Da, Pa) of fluid flow (D) and pressure (P) exceeds a first predefined warning threshold.

4. The spraying system as claimed in any one of claims 2 to 4, wherein the command unit (140) is configured to generate a second warning signal as soon as a difference between a pair of measured values (D1, P1, D2, P2, Dn, Pn) of fluid (210, 220) flow (D) and pressure (P) and a pair of reference values (Da, Pa) of fluid (210, 220) flow (D) and pressure (P) exceeds a second predefined warning threshold.

5. The spraying system as claimed in any one of the preceding claims, wherein the first apparatus (120) is configured to measure a flow (D) of a binder (210) forming an incompressible fluid of the sprayed bonding composition (200) and in that the second apparatus (130) is configured to measure a pressure (P) of this binder (210).

6. The spraying system as claimed in any one of claims 1 to 5, wherein the spraying system comprises means for maintaining a constant ratio between the fluids forming the bonding composition and in that one of the apparatus is configured to measure a value of the flow, respectively of the pressure, of a binder (210) forming an incompressible fluid of the sprayed bonding composition (200), whilst the other apparatus is configured to measure a value of the pressure, respectively of the flow, of air forming a second fluid of the bonding composition.

7. A manufacturing installation, in particular for mineral wool (100), comprising fiber drawing means configured to feed fibers into a station (2) for bonding these fibers, wherein the bonding station comprises a spraying system as claimed in any one of the preceding claims.

8. A method for controlling the spraying quality of a bonding composition (200) sprayed onto mineral fibers (300), comprising at least:
- a step of defining a plurality of pairs of reference values (Da, Pa, Db, Pb, ... Dn, Pn), respectively of a flow (D) of a fluid (210, 220) of the bonding composition (200) and of a pressure (P) of a fluid (210, 220) of the bonding composition (200);
- a step (S1) of simultaneously measuring, respectively by a first apparatus (120) and by a second apparatus (130) of a spraying system as claimed in any one of the claims 1 to 6, a value (D1, D2, Dn) of a flow (D) of a fluid (210, 220) of the bonding composition (200) and a value (P1, P2, Pn) of a pressure (P) of a fluid (210, 220) of the bonding composition (200);
- a step (S3) of comparing a pair (D1, P1, D2, P2, Dn, Pn) formed by a measured fluid flow value (D1, D2, Dn) and a measured fluid pressure value (P1, P2, Pn) with at least one pair of reference fluid flow and fluid pressure values (Da, Pa), the feeding of the fluid of the bonding composition being controlled by a pump so that a value of the flow of the fluid is constant.

9. The method as claimed in the preceding claim, wherein, during the comparison step (S3), a reference value identical to a value measured in the measuring step (S1) is identified from among charts consolidating the pairs of reference values and the other value of the pair of reference values is compared to the other value of the pair of measured values, with a warning step (S4) being generated in the event of a significant difference between the compared measured value and the compared reference value.

10. The method as claimed in any one of claims 8 or 9, comprising a retroaction step, during which an action for treating the state of the ring is manually or automatically implemented following the triggering of a warning signal.
